# EUROPEAN PATENT SPECIFICATION

(11) **EP 2 748 398 B1**
(45) Date of publication and mention of the grant of the patent: **18.10.2017**
(21) Application number: 12820897.2
(22) Date of filing: 21.11.2012
(51) Int. Cl.: E06B 9/24, H05B 37/02, E06B 9/68, E06B 9/322

(54) **A METHOD FOR SHARING MOVEMENT ADAPTATION SCHEDULE TO PREVENT FALSE POSITIVE INDICATIONS IN MOTION SENSING BASED SYSTEMS**
VERFAHREN ZUR FREIGABE EINES BEWEGUNGSANPASSUNGPLANS ZUR VERHINDERUNG FEHLERHAFTER POSITIVER ANZEIGEN IN BEWEGUNGSERFASSUNGSSYSTEMEN
PROCÉDÉ DE PARTAGE D'UN PROGRAMME D'ADAPTATION DE DÉPLACEMENT POUR ÉVITER LES INDICATIONS POSITIVES ERRONÉES DANS DES SYSTÈMES BASÉS SUR LA DÉTECTION DE MOUVEMENT

(30) Priority: 01.12.2011 US 201161565683 P
(43) Date of publication of application: 02.07.2014
(73) Proprietor: Philips Lighting Holding B.V., 5656 AE Eindhoven (NL)
(72) Inventor: PATEL, Maulin Dahyabhai, NL-5656 AE Eindhoven (NL)
(74) Representative: van Eeuwijk, Alexander Henricus Waltherus
(86) International application number: PCT/IB2012/056581
(87) International publication number: WO 2013/080090

(56) References cited:
- US-A1- 2005 110 416

## Description

This application relates to the field of system management and more particularly a method for improved determination of motion in motion-based systems.

With the increased emphasis on energy conservation, systems for reducing the electrical energy consumed by lighting systems are used to limit the unintended operation of lighting system. Scheduling is one example to limit unintended operation of lighting system wherein the timer controls the energy flow to the lighting system during specified times. Another example is using a photo-electric sensor wherein the lights are turned on if photo-sensor detects insufficient light and lights are turned off if it detects too much light.

Another example of limiting the unintended operating of lighting systems is to use motion sensors, wherein the flow of electrical energy occurs when motion is detected. Motion sensors, also known as occupancy sensors, are generally used in rooms to limit the use of the lighting system only when the room is occupied. Occupancy sensors may also be coupled with photo-sensors to limit the electrical energy flow. The photo-sensor may sense the ambient light level in the room and if the light level is above a threshold level, then the lighting system is preventing from being activated even if motion is sensed.

While these systems are useful in controlling the lighting system, they do not consider other factors that may contribute to energy consumption. For example, if the window blinds or shades are drawn (closed), a photo-sense occupancy sensor may activate the lighting system when motion is detected and the ambient light level is too low. However, just opening the blinds or shades to increase the ambient level may not be practical as the opened blinds may allow sunlight to enter the room. Depending on the direction of the window and the angle of sun, the added sun light may cause discomfort to the occupant due to glare.

To overcome the unintended consequence of only managing one aspect of energy consumption, integrated lighting and shading systems have been developed. For example, a Hybrid Integrated Lighting and Daylight Control (ILDC) system comprising of Philips sensors, lights, dimming ballasts, networking infrastructure incorporating motorized blinds have been developed. A key differentiator between a Hybrid ILDC and the other light management systems is the ability of the Hybrid ILDC system to opportunistically integrate daylight with artificial light without causing discomfort associated with bright windows and dull interiors.

A fundamental problem observed during ILDC operation is that the blind movement triggers occupancy sensors. The false positive occupancy detection due to blind movement turns lights ON and/or keeps lights ON thereby wasting significant amount of energy.

Hence, there is a need in the industry for a method of coordinating the blind movement to avoid detection by the occupancy sensor.

The present invention has been made to provide for integrated control of a lighting system and a motorized window covering/window treatment system that reduces the false positive indication and, also, reduces energy consumption.

For example, window coverings or treatments may be well-known Venetian blinds, where the blinds may be raised to expose the enclosed area to the outside environment or lowered to prevent exposure of the enclosed area to the outside environment. Similarly, the angle of the blinds may be set to allow discreet amount of light to enter the enclosed area. Other types of window coverings may be vertical blinds that operate similar to Venetian blinds moved in a horizontal direction and the angle of the blinds is with respect to a vertical axis. Additionally, Roman window treatments operate to allow selected areas of the treatment to open or close. Roller shades are also used to cover the window for glare mitigation, solar heat gain reduction and daylight regulation. Other types of window treatments and coverings are known and considered in the scope of the invention claimed.

In one aspect of the invention, a system is disclosed for management of a response to motion detection in a motion-based system comprising, one or more occupancy sensors distributed about an enclosed area, said one or more occupancy sensors detecting motion within the enclosed area, a window treatment system having at least one means for controlling at least one of: a position and an orientation of the window treatment system, a processor in communication with a memory, the memory including code which when accessed by the processor causes the processor to determine a schedule of movements of each of the window treatment position and the window treatment orientation and providing the schedules of movements to selected ones of the one or more occupancy sensors, wherein the selected occupancy sensors receiving the provided schedules negate detection of motion during periods of said movements identified by the provided schedules.

The above and other exemplary features, aspects, and advantages of the present invention will be more apparent from the following detailed description taken in conjunction with the accompanying drawings, in which:
Figure 1 illustrates a conventional integrated lighting and window covering system.
Figure 2 illustrates a schematic of conventional integrated lighting and window covering system.
Figures 3(a) and 3(b) illustrate an exemplary configuration illustrating factors used is determining lighting and blind settings.
Figure 4 illustrates a graph of orientation cut-off angle with respect to the time of day according to the conventional integrated lighting and blind system.
Figure 5 illustrates a graph of orientation cut-off angle with respect to the time of day in accordance with the principles of the present invention.
Figure 6 illustrates a flow chart of a process in accordance with the principles of the invention.
Figure 7 illustrates an exemplary system for implementing the processing shown herein.

It is to be understood that these drawings are solely for purposes of illustrating the concepts of the invention and are not intended as a definition of the limits of the invention. It will be appreciated that the same reference numerals, possibly supplemented with reference characters, where appropriate, have been used throughout to identify corresponding parts.

Existing lighting control and shading systems typically operate independently, thereby leading to sub-optimal energy efficiency and causing inconvenience to users. Integrated control of artificial lights and motorized blinds provides for optimal use of natural light and artificial light while enhancing user comfort and productivity.

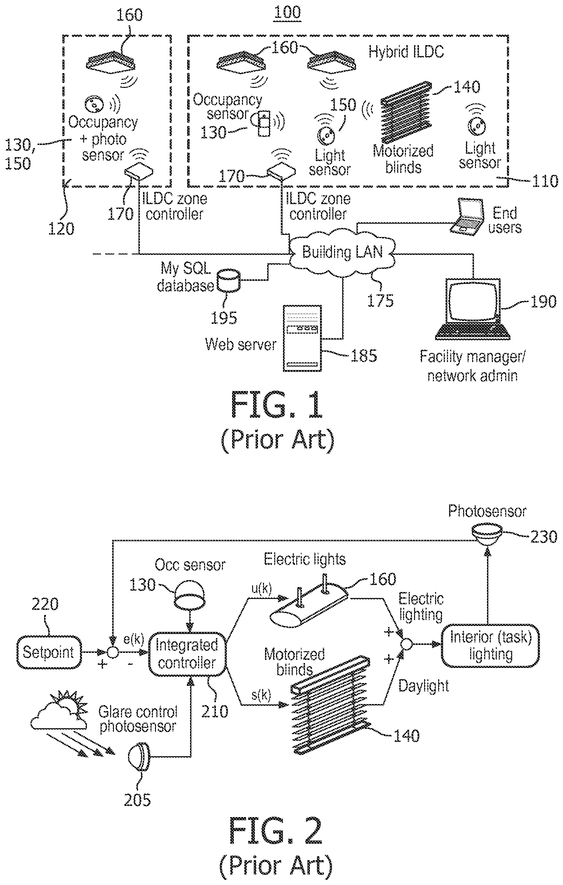

Figure 1 illustrates a conventional ILDC system 100 wherein, each user's workstation or area is associated with corresponding sensors, window blinds and fixtures to enable personalized integrated control. The system combines user preferences with sensor readings (occupancy and light level) to harvest natural light through integrated control of motorized blinds and electric light.

Each workstation or area 110, 120 may incorporate motion sensors 130 and/or motorized blinds 140. In addition, light sensors 150 may be included, which monitor ambient light levels.

The motion sensors 130 detect motion as previously described to activate the lights 160. In addition, blinds 140 are capable of receiving commands to control the height of the blind and the angle of the blind with respect to a horizontal axis.

Each workstation or area further includes control units 170 that monitor the corresponding workstation and provide control signals to at least the motorized blinds.

The control units 170 are in communication, via a network 175, to a centralized control system that maybe represented by a server 185 and a computer 190. The information obtained from the control units 170 may further be stored on permanent storage medium 195.

Figure 2 illustrates in further detail the integrated aspect of the ILDC system. In this case, occupational (occupancy) sensor 130 and glare control photo sensor 205 provide signals to integrated controller 210. The occupancy sensor 130, as discussed, provides a signal when motion is detected which is used to infer whether the space is occupied or not. The glare control photo sensor provides signals with regard to a level of glare or sunlight that is entering the workspace. Setpoint 220 provides a reference point against which the photo-sensor 230 output is compared. The deviation from setpoint 220 is deduced to derive the amount of artificial light from lighting system 160 that is needed, in combination with natural light, to satisfy the overall illumination needs of the user. That is artificial lights are regulated using occupancy sensor 130 and light sensors 150 and/or photosensor 230. The artificial lights are turned OFF when the space is vacant. When the space is occupied, blinds 140 are open to allow in daylight to an extent that the daylight does not cause discomfort (glare). The artificial light is dimmed so that the combination of artificial light and natural light meets the user's requirement.

The integrated controller 210 receives inputs from the setpoint 220, the occupancy sensor 130, photosensor 230 and the glare control sensor 205 to determine settings for the amount of artificial light and amount of natural light by adjusting the window covering (e.g., slat cutoff angle, window covering height, etc.). The photo sensor 230 monitors the level of light in the workspace and provides this information, as a feedback, to the integrated controller 210.

In determining the positions of the blinds, an open-loop blind height and slat angle control algorithm is implemented in ILDC system. The algorithm adapts blind height and slat angle periodically to avoid glare and enable daylight harvesting. A "cut-off angle" and "cut-off height" are calculated based factors such as latitude, longitude, orientation of window, date, local time, space geometry and slat geometry. An example of the algorithm for computing the cut-off angle (defined as the angle beyond which no direct radiation is being transmitted through the slats) for blind slats may be found in "The Impact of Venetian Blind Geometry and Tilt Angle on View, Direct Light Transmission and Interior Illuminance," A. Tzempelikos, Solar Energy, vol. 82, no. 12, pp. 1172-1191, December 2008.

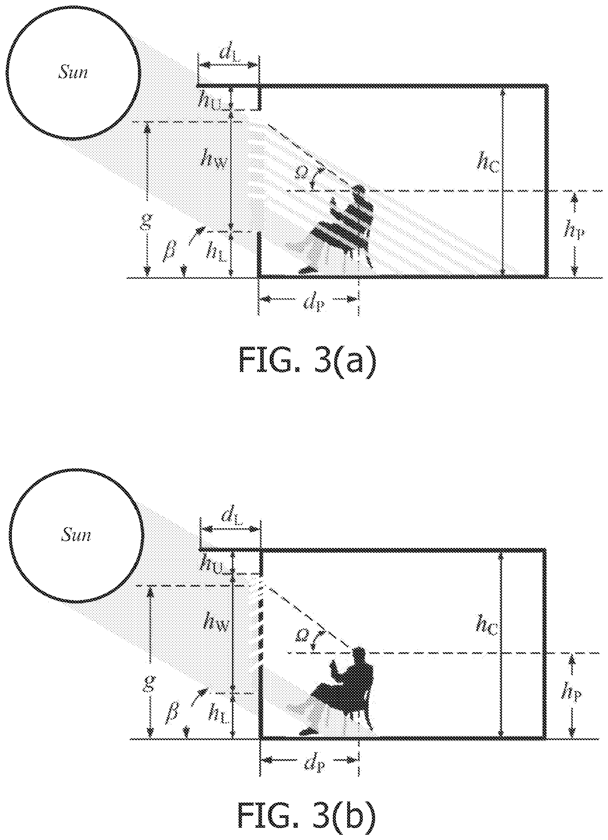

Figures 3(a) and 3(b) illustrate examples of the adjustment of the cut-off angle and cut-off height, wherein the cut-off angle and the cut-off height are based on factors such as sun angle (β), height of window from the ground (hₗ), distance of any overhang (d_{L}), height of the window (h_{w}) and the distance of the user from the wall containing the window allowing the sun to enter.

Table 1 presents exemplary values associated with information regarding the location of the blind being controlled.

**Table 1 A variable list of solar angles**

| | |
|---|---|
| *L* | Local latitude |
| *LL* | Local longitude |
| *Y* | Facing direction of the room |
| *LST* | Local standard time |
| *AST* | Apparent solar time |
| *SL* | Standard longitude |
| *N* | The day of a year |
| *ET* | Equation of time |
| *DS* | Daylight saving |
| ***h*** | Hour angle |
| *δ* | Solar declination angle |
| *α* | Solar altitude angle |
| *z* | Solar azimuth angle |
| *z_{S}* | Surface solar azimuth |
| *β* | Solar profile angle |

Table 2 presents additional information used in determining blind control:

**Table 2 A list of variables for the blind height control**

| | |
|---|---|
| ***h**_{C}* | the height from the ceiling to the floor |
| ***h**_{D}* | the height from the workplane desk surface to the floor |
| ***h**_{U}* | the height from the ceiling to the upper frame of the window |
| ***h**_{W}* | the height of the window |
| ***h**_{L}* | the height from the lower frame of the window to the floor |
| *d_{L}* | the width of overhang |
| *d_{W}* | the thickness of the wall containing the window |

As would be appreciated, Figures 3(a) and 3(b) may represent an east facing window or a west facing window. In the former case, the blinds may be adjusted based on a rising sun. In the latter case, the blinds may be adjusted based on a setting sun. In Figure 3(a), the blind slat-angle 305 remains in a position which allows the sun light to enter the room and is directed toward the user, as indicated by the partial shading of the person sitting by the window. In Figure 3(b), the blind slats are set to cut-off angle 315 to block the sun from causing discomfort to the user, as indicated by the full shading of the person sitting by the window.

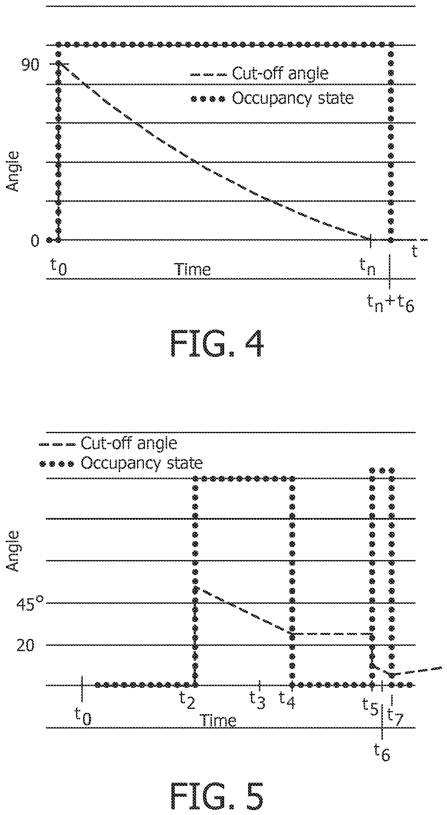

Figure 4 is an example of the cut-angle variation as a function of the time of the day, with regard to a South-East facing window blind within a building located at latitude = 35.2628 degrees and longitude = -116.6944 degrees and with a Window orientation = 133 degrees. In this case, the following convention specify window orientation: North 0 degree, East 90 degrees, South 180 degrees and West is 270 degrees.

In this example, the cut-off angle is initially at zero degrees for a night time condition (i.e. slats are flat) and occupancy sensor is in unoccupied state. The cut-off angle is set to 90degrees at dawn t₀ to block direct sun on a south-east facing window. That is, based on the cut-off angle algorithm the cut-off angle for the slats is determined to be ninety (90) degrees based on the time of day, the direction of the window and other factors as previously described.

However, the room is still unoccupied, but the blind motion triggers the occupancy sensor to indicate motion in the room. The detected motion causes the room to be considered as being in an occupied state at t₀. The triggering of the occupancy sensor further causes the lights to be turned-on. The cut-off angle decreases as the sun rises and the cut-off angle reaches zeros degrees at tₙ.

As an example, assume that the cut-off angle changes approximately every 4 minutes (a predetermined time for adjusting or causing movement). Since the occupancy sensor timeout interval is 10 minutes, the occupancy sensor remains in occupied state until tₙ +10 minutes. In this scenario, the occupancy sensor remains in false positive occupied state due to cut-off angle adaptations for about 3.5 hours during which lights are left ON.

As the blind height and cut-off angle are adapted throughout the day to regulate daylight and avoid glare, the false triggering of occupancy sensors can persist during the whole time. At night, the blinds could be adjusted for privacy/security reasons and/or to minimize heat gain/loss. Therefore, the false triggering of occupancy sensors due to blind movement can lead to enormous lighting energy wastage.

To address this problem we developed a method that schedules the movement adaptations at future times. The blind motion start times and durations of the movements are conveyed to occupancy sensors. The Occupancy sensor disables occupancy sampling during blind motion thereby preventing false positive detection. To mitigate glare and to optimize the system performance, several refinements to the core technique are also presented.

Figure 5 illustrates a resulting cut-off angle variation graph after the implementation of a preferred embodiment in accordance with the principles of the invention. In this illustrative graph, the cut-off angle is set to zero degrees at night (i.e. slats are flat and this is the last position setting for the blinds) and the occupancy sensor indicates that the space is unoccupied. In accordance with the principles of the invention, the blind cut-off angles remains in an initial state (e.g., 0 degrees) at time t₀ and remains in this state until time t₂, when motion is detected. That is, when someone enters the space.

The occurrence of motion (room occupation) causes the blind cut-off angle to be adjusted based on the time of day and other factors (i.e., the latitude, longitude, and orientation of the window and geometric properties of the blinds and space, etc., as previously discussed). That is, if motion is detected by the occupancy or motion sensors during a period when blind position movement and/or orientation movement are not scheduled to take place then the occupancy sensor provides an indication of motion, which in turn causes the window treatment to be set to a desired position, and orientation based on the above factors.

Thus, in this illustrated case, when motion is detected, the slats are set to 45 degree cut-off angle based on the geographical orientation, geographical location, geometric properties of the blind and space, and time of day, as previously described. In addition, while the room remains occupied (as determined by repeated motion detection during periods in which blind movement is not scheduled to take place), the position and the orientation of the window treatment is continually updated. In this case, only the orientation of the window treatment is illustrated and it would be recognized that both position and orientation could be adjusted during this period.

At time t₃ the occupant walks out of the space. Although the blinds continue to move to adjust the cut-off angle, the occupancy sensor timeout countdown expires at t₄ because the sampling is inhibited or disabled during the period of blind motion. However, after t₄, because there is no further motion detection, the blinds stop moving. Thus, the slat angle (orientation) remains at 20 degrees until the occupancy state again changes. In this exemplary example, the occupancy state again changes when the occupant walks into the space at t₅. At time t₅, the cut-off angle is set to 6 degrees based on the time, geographic location and geometric properties etc., as previously described, and the indication of motion. The motion ends when the occupant walks out of the space at t₆. The occupancy timer times out at time t₇ (which is t₆ plus the occupancy sensor time out period). Hence, the slat cut-off angle remains at 2 degrees as the slat cut-off angle is adjusted from 6 degrees to 2 degrees during this second period of occupancy.

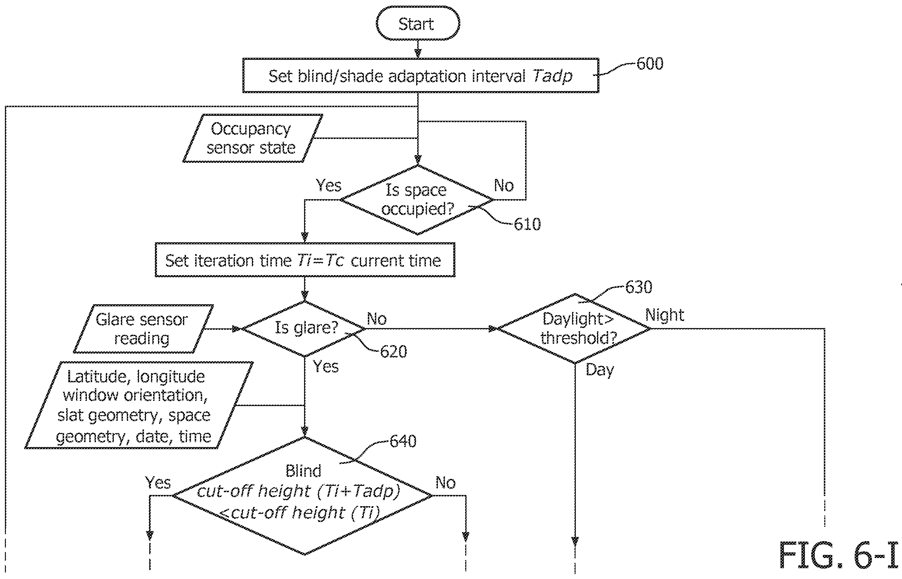

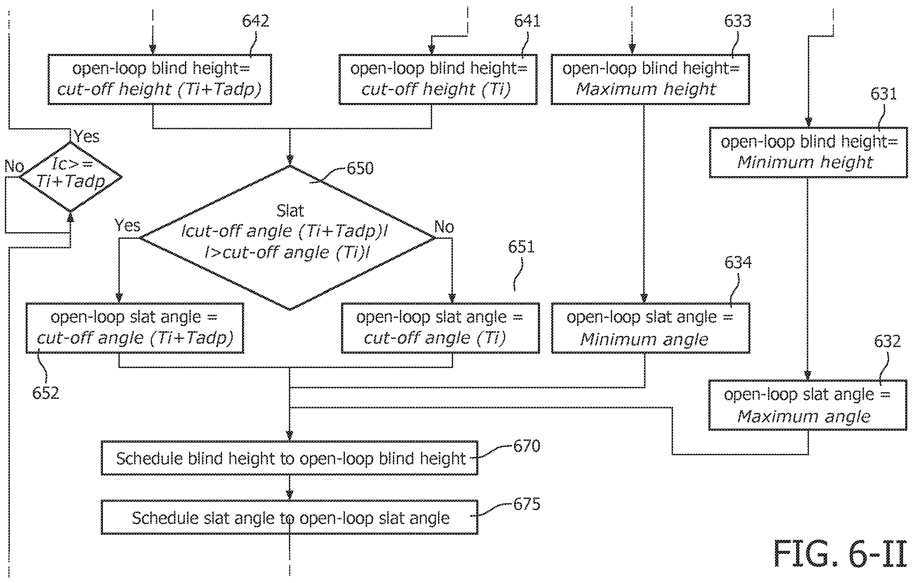

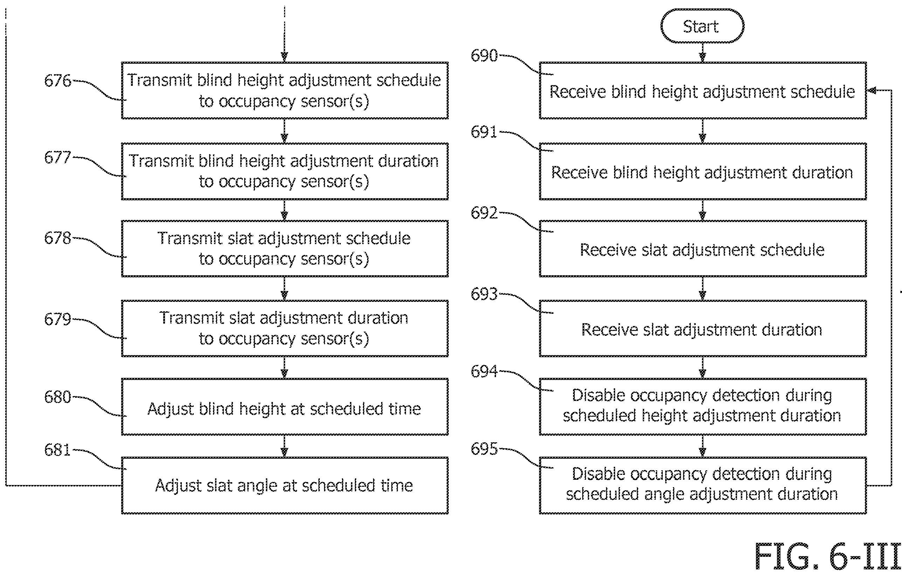

Figure 6 illustrates an exemplary process of motion detection management in accordance with the principles of the invention. As would be recognized, the process shown in Figure 6 is one associated with a Venetian blind window covering system. However, the same processing may be easily adapted for application with Vertical blind, Roman blind and roller shade systems.

With reference to Figure 6, at block 600, a predetermined adjustment interval is established. The adjustment interval is used as a basis for establishing a schedule of times when either position of the window treatment or orientation of the window treatment may occur.

A determination is made at block 610 whether the space is occupied. If the space is not occupied, the processing maintains the current position of the blind height and slat cut-off angle. However, when the space is occupied, then a determination is made at block 620, whether glare exists in the space. This may be determined based on the position of the sun, time of day, location, and/or measurement by a glare sensor. If glare is determined not to exist, a determination is made whether the daylight is above a threshold level at block 630. This may be accomplished by a daylight sensor and/or an astronomical clock. If the light level is not above a threshold level, then the height (i.e., position) and slat cut-off angle (i.e., an orientation) are set to minimum and maximum values respectively, blocks 631, 632. However, if the day light is above the threshold then the blind height and slat cut-off angle are set to maximum and minimum values, respectively, blocks 633, 634. In the preferred embodiment the minimum height corresponds to a fully deployed (lowered) blind (window covering) and the maximum height corresponds to a fully retracted (raised) blind. In the preferred embodiment the minimum slat angle corresponds to the fully open horizontal slats (zero degrees from the horizontal plane) and maximum slat angle corresponds to the fully closed vertical slats (ninety degrees from the horizontal plane).

However, if at block 620, it is determined that glare exists, then the blind height is determined at block 640 and the slat cut-off angle is determined at block 650. The details of the determination of the blind height and the cut-off angle are described in "The Impact of Venetian Blind Geometry and Tilt Angle on View, Direct Light Transmission and Interior Illuminance,".

With reference to block 640, if it is determined that a blind cut-off height computed based on the next iteration time), is less than the cut-off height computed based on the current iteration time, then the blind height is set to cut-off height based on the next iteration time.(642). Otherwise, the blind height is set to cut-off height based on the current iteration time.(641). Similarly, at block 650 a determination is made whether a slat-angle computed based on the next iteration time is greater than a cut-off angle computed based on the current iteration time. If the answer is yes, then the slat angle is set to cut-off angle based on the next iteration time (652). Otherwise, the slat angle is set to cut-off angle based on the current iteration time (651).

A schedule of blind height adjustments is determined at block 670. Similarly, a schedule of blind cut-off angle adjustments is determined at block 675. The schedule of blind height adjustments and durations of adjustments are then provided to the occupancy sensor at block 676, 677, respectively. Similarly, the schedule of slat cut-off angle adjustments and durations of adjustments are provided to the occupancy sensor at blocks 678, 679. The blind height and the cut-off angle are then adjusted at the scheduled times in blocks 680, 681, respectively.

The occupancy sensor, upon receiving the blind height adjustment schedule and duration, and the slat angle adjustment schedule and duration, at blocks 690-693, respectively, causes the occupancy sensor to freeze the occupancy sensor timeout countdown during the durations of height and angle adjustment at the appropriate schedule time at blocks 694, 695, respectively. That is, during the scheduled periods of movement the occupancy sensor time out is suspended

In one aspect of the invention, the occupancy sensor having received the schedule of blind height movement (and duration) and/or the slat cut-off angle movement (and duration), may cause a blank pulse to occur which prevents the occupancy sensor from monitoring motion during the period (duration) of either blind height movement and/or slat angle movement. In another aspect, the occupancy sensor may continue to monitor movement in a conventional manner. However, the monitored movement may be negated during the scheduled durations of blind height movement and/or slat angle movement.

In yet another embodiment of the invention, the occupancy sensor continues to detect the motion during the period (duration) of either blind height movement and/or slat angle movement to learn whether it can sense (detect) either the blind height movement and/or slat angle movement. If it can persistently detect (sense) either the blind height movement and/or slat angle movement then the sensor may conclude that it is sensitive to the blind height movement and/or slat angle movement (i.e. suffering from false positive occupancy detection). If an occupancy sensor is unable to (sense) detect either the blind height movement and/or slat angle movement during the scheduled times then the sensor may conclude that it is not sensitive to (i.e. not affected by) the blind height movement and/or slat angle movement.

In another aspect of the invention, after an occupancy sensor determines that it is sensitive to either the blind height movement and/or slat angle movement (i.e. it is suffering from false positive occupancy detection) then it may lower its sensitivity to motion to prevent detection of the blind height movement and slat angle movement.

Although the invention has been described with regard to the occupancy sensor receiving the blind height schedule and duration and the slat cut-off angle schedule and duration, it would be recognized that the schedule and duration information may be available to a central processing controller in which the central processing controller may utilize the schedule and duration information to manage the motion detecting signals of the occupancy sensor.

Disabling occupancy detection for the durations of blind movements can lead to false negatives. In practice, a space can be covered by multiple occupancy sensors. Moreover, a user occupying a space can be linked to multiple occupancy sensors to improve the fidelity of detection. Typically, the occupancy sensors close to the window suffer from false positive triggers due to blind movements whereas those which are away from the window do not suffer from false positive triggers (due to blind motion). Thus, the occupancy sensors which are triggered by blind movement can receive the schedule notifications from blinds and disable the occupancy detection whereas the occupancy sensors which are not affected by blind movements do not need to disable the occupancy detection. This mitigates false negative issue caused by disabling occupancy detection
for the duration of the blind adaptation. Furthermore, the occupancy sensor countdown timer could be frozen for the duration of blind adaptation. Hence, the occupancy detection fidelity will not be compromised.

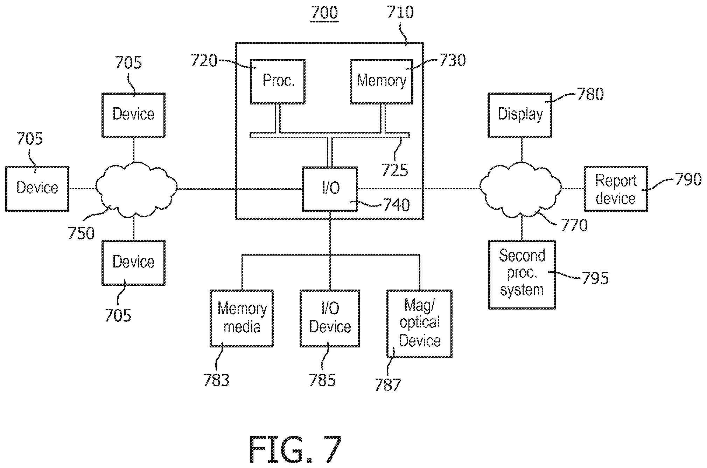

Figure 7 illustrates a system 700 for implementing the principles of the invention as depicted in the exemplary processing shown herein. In this exemplary system embodiment 7000, input data is received from sources 705 over network 750 and is processed in accordance with one or more programs, either software or firmware, executed by processing system 710. The results of processing system 710 may then be transmitted over network 770 for viewing on display 780, reporting device 790 and/or a second processing system 795.

Processing system 710 includes one or more input/output devices 740 that receive data from the illustrated sources or devices 705 over network 750. The received data is then applied to processor 720, which is in communication with input/output device 740 and memory 730. Input/output devices 740, processor 720 and memory 730 may communicate over a communication medium 725. Communication medium 725 may represent a communication network, e.g.,ISA, PCI, PCMCIA bus, USB (universal serial bus) or one or more internal connections of a circuit, circuit card or other device, as well as portions and combinations of these and other communication media.

Processing system 710 and/or processor 720 may be representative of a handheld calculator, special purpose or general purpose processing system, desktop computer, laptop computer, palm computer, or personal digital assistant (PDA) device, smartphone, etc., as well as portions or combinations of these and other devices that can perform the operations illustrated.

Processor 720 may be a central processing unit (CPU) or dedicated hardware/software, such as a PAL, ASIC, FGPA, operable to execute computer instruction code or a combination of code and logical operations. In one embodiment, processor 720 includes code which, when executed by the processor, performs the operations illustrated herein. The code may be contained in memory 730, may be read or downloaded from a tangible memory medium such as a CD-ROM or floppy disk, represented as 783, may be provided by a manual input device 785, such as a keyboard or a keypad entry, or may be read from a magnetic or optical medium (not shown) or via a second i/o device 787 when needed. Information items provided by devices 783, 785, 787 may be accessible to processor 720 through input/output device 740, as shown. Further, the data received by input/output device 740 may be immediately accessible by processor 720 or may be stored in memory 730. Processor 720 may further provide the results of the processing to display 780, recording device 790 or a second processing unit 795.

As one skilled in the art would recognize, the terms processor, processing system, computer or computer system may represent one or more processing units in communication with one or more memory units and other devices, e.g., peripherals, connected electronically to and communicating with the at least one processing unit. Furthermore, the devices illustrated may be electronically connected to the one or more processing units via internal busses, e.g., serial, parallel, ISA bus, MICROCHANNEL bus, PCI bus, PCMCIA bus, USB, etc., or one or more internal connections of a circuit, circuit card or other device, as well as portions and combinations of these and other communication media, or an external network, e.g., the internet and intranet. In other embodiments, hardware circuitry may be used in place of, or in combination with, software instructions to implement the invention. For example, the elements illustrated herein may also be implemented as discrete hardware elements or may be integrated into a single unit.

As would be understood, the operations illustrated may be performed sequentially or in parallel using different processors to determine specific values. Processing system 710 may also be in two-way communication with each of the sources 705. Processing system 710 may further receive or transmit data over one or more network connections from a server or servers over, e.g., a global computer communications network such as the internet, intranet, a wide area network (wan), a metropolitan area network (man), a local area network (LAN), a terrestrial broadcast system, a cable network, a satellite network, a wireless network, or a telephone network (POTS), as well as portions or combinations of these and other types of networks. As will be appreciated, networks 750 and 770 may also be internal networks or one or more internal connections of a circuit, circuit card or other device, as well as portions and combinations of these and other communication media or an external network, e.g., the internet and intranet.

## Claims

1. A system for management of a response to motion detection in a motion-detection based system comprising:
one or more occupancy sensors (130) distributed about an enclosed area, said one or more occupancy sensors detecting motion within the enclosed area;
a window treatment system (140) having at least one means for controlling at least one of: a position and an orientation of the window treatment system; and
a processor (720) in communication with a memory (730), the memory including code which when accessed by the processor causes the processor to:
determine a schedule of movements (670, 675) of each of the window treatment position and the window treatment orientation;
provide the schedules of movements to selected ones of the one or more occupancy sensors (130), wherein the selected occupancy sensors receiving the provided schedules negate detection of motion during periods of said movements identified by the provided schedules.

2. The system of claim 1, wherein the schedules of movements include a start time of movement and a duration of movement.

3. The system of claim 1, wherein the schedules are based on a predetermined time interval.

4. The system of claim 1, wherein said occupancy sensors determine a sensitivity to motion by monitoring movement of each of said window treatment position and the window treatment orientation.

5. The system of claim 4, wherein the orientation of the window treatment system is based on a geographic location, a geographic orientation of the window treatment, a time of day, day of the year, geometric properties of the window treatment and geometric properties of the space.

6. The system of claim 4, wherein the positions of the window treatment system are based on at least one of a geographic location, a geographic orientation of the window treatment, a time of day, day of the year, geometric properties of the window treatment and geometric properties of the space.

7. The system of claim 1, wherein the selected ones of the one or more occupancy sensors (130) are sensitive to the movements of the window treatment system.

8. The system of claim 1, wherein the one or more occupancy sensors (130) comprise
at least one motion sensing unit;

9. The system of claim 8, wherein the schedules include a time to start movement and a duration of movement of corresponding ones of window treatment position and window treatment orientation.

10. A method for management of a response to motion detection in a motion-based system, wherein said system comprises one or more occupancy sensors (13) distributed about an enclosed area, said one or more occupancy sensors detecting motion within the enclosed area, said method comprising:
determining schedules (670,675) for movements of a position and for movements of an orientation of a window treatment system (140), wherein the schedules of movements include a time of movement and a duration of movement;
providing the schedules of movement to selected ones of the one or more occupancy sensors within an enclosed area, wherein the selected occupancy sensors (130) receiving the provided schedules negate detection of motion during periods of said movements identified by the provided schedules.

11. The method of claim 10, wherein the schedules are based on a predetermined time interval.

12. The method of claim 10, further comprising:
determining a sensitivity to motion by monitoring movement of each of said window treatment position and the window treatment orientation.

13. The method of claim 10, wherein the positions of the window treatment system is based on at least one of a geographic location, a geographic orientation of the window treatment, a time of day, day of the year, geometric properties of the window treatment and geometric properties of the space.

14. The method of claim 10, wherein the orientation of the window treatment system is based on at least one of a geographic location, a geographic orientation of the window treatment, a time of day, day of the year, geometric properties of the window treatment and geometric properties of the space.

15. The system of claim 4, wherein the selected ones of the one or more
occupancy sensors (130) are those that are determined to be sensitive to movement of at least one of the window treatment position and the window treatment orientation.

16. The system of claim 8, wherein the step of providing said schedules of movements to at least one motion sensing unit comprises:
determining, for each said at least one motion sensing unit, a sensitivity to movement of each of at least one a position and an orientation of the window treatment;
providing said schedule to those of said at least one motion sensing unit determined to be sensitive to said movement.

17. The system of claim 16, wherein determining the sensitivity comprises:
monitoring movement of each of at least one a position and an orientation of the window treatment;
determining whether said movement is sufficient to trigger said motion sensing unit; preventing activation of said motion sensing unit in view of said movement.

## Patentansprüche

1. System zur Handhabung einer Reaktion auf Bewegungsdetektion in einem Bewegungsdetektion-basierten System, umfassend:
einen oder mehrere, um einen umschlossenen Bereich verteilte Anwesenheitssensoren (130), wobei der eine oder mehrere Anwesenheitssensoren eine Bewegung innerhalb des umschlossenen Bereichs detektieren;
ein Jalousiesystem (140) mit mindestens einem Mittel zur Steuerung von zumindest: einer Position oder einer Ausrichtung des Jalousiesystems; sowie
einen Prozessor (720) in Kommunikation mit einem Speicher (730), wobei der Speicher einen Code enthält, der, wenn auf diesen durch den Prozessor zugegriffen wird, den Prozessor dazu veranlasst:
einen Bewegungsplan von jeder Position des Jalousiesystems und Ausrichtung des Jalousiesystems zu ermitteln (670, 675);
einem oder mehreren ausgewählten Anwesenheitssensoren (130) den Bewegungsplan zuzuführen, wobei die die bereitgestellten Pläne empfangenden ausgewählten Anwesenheitssensoren die Bewegungsdetektion während Perioden der Bewegungen, die durch die bereitgestellten Pläne identifiziert werden, negieren.

2. System nach Anspruch 1, wobei die Bewegungspläne eine Bewegungsstartzeit und eine Bewegungsdauer enthalten.

3. System nach Anspruch 1, wobei die Pläne auf einem vorgegebenen Zeitintervall basieren.

4. System nach Anspruch 1, wobei die Anwesenheitssensoren eine Bewegungsempfindlichkeit durch Überwachen der Bewegung jeder Position des Jalousiesystems und Ausrichtung des Jalousiesystems ermitteln.

5. System nach Anspruch 4, wobei die Ausrichtung des Jalousiesystems auf einer geographischen Position, einer geographischen Ausrichtung des Jalousiesystems, einer Tageszeit, einem Tag des Jahres, geometrischen Eigenschaften des Jalousiesystems sowie geometrischen Eigenschaften des Raumes basiert.

6. System nach Anspruch 4, wobei die Positionen des Jalousiesystems auf zumindest einer geographischen Position, einer geographischen Ausrichtung des Jalousiesystems, einer Tageszeit, einem Tag des Jahres, geometrischen Eigenschaften des Jalousiesystems oder geometrischen Eigenschaften des Raumes basieren.

7. System nach Anspruch 1, wobei der eine oder mehrere ausgewählte Anwesenheitssensoren (130) empfindlich gegenüber den Bewegungen des Jalousiesystems sind.

8. System nach Anspruch 1, wobei der eine oder mehrere Anwesenheitssensoren (130) umfassen:
mindestens eine Bewegungserfassungseinheit.

9. System nach Anspruch 8, wobei die Pläne einen Zeitpunkt zum Bewegungsbeginn sowie eine Bewegungsdauer entsprechend der Position des Jalousiesystems oder Ausrichtung des Jalousiesystems enthalten.

10. Verfahren zur Handhabung einer Reaktion auf Bewegungsdetektion in einem bewegungsbasierten System, wobei das System einen oder mehrere, um einen umschlossenen Bereich verteilte Anwesenheitssensoren (130) umfasst, wobei der eine oder mehrere Anwesenheitssensoren eine Bewegung innerhalb des umschlossenen Bereichs detektieren, wobei das Verfahren umfasst:
Ermitteln von Plänen (670,675) für Bewegungen einer Position sowie für Bewegungen einer Ausrichtung eines Jalousiesystems (140), wobei die Bewegungspläne einen Bewegungszeitpunkt und eine Bewegungsdauer enthalten;
Zuführen der Bewegungspläne zu einem oder mehreren ausgewählten Anwesenheitssensoren innerhalb eines umschlossenen Bereichs. wobei die die bereitgestellten Pläne empfangenden ausgewählten Anwesenheitssensoren die Bewegungsdetektion während Perioden der Bewegungen, die durch die bereitgestellten Pläne identifiziert werden, negieren.

11. Verfahren nach Anspruch 10, wobei die Pläne auf einem vorgegebenen Zeitintervall basieren.

12. Verfahren nach Anspruch 10, weiterhin umfassend:
Ermitteln einer Bewegungsempfindlichkeit durch Überwachen der Bewegung jeder Position des Jalousiesystems und Ausrichtung des Jalousiesystems.

13. Verfahren nach Anspruch 10, wobei die Positionen des Jalousiesystems auf zumindest einer geographischen Position, einer geographischen Ausrichtung des Jalousiesystems, einer Tageszeit, einem Tag des Jahres, geometrischen Eigenschaften des Jalousiesystems oder geometrischen Eigenschaften des Raumes basieren.

14. Verfahren nach Anspruch 10, wobei die Ausrichtung des Jalousiesystems auf zumindest einer geographischen Position, einer geographischen Ausrichtung des Jalousiesystems, einer Tageszeit, einem Tag des Jahres, geometrischen Eigenschaften des Jalousiesystems oder geometrischen Eigenschaften des Raumes basiert.

15. System nach Anspruch 4, wobei der eine oder mehrere ausgewählte Anwesenheitssensoren (130) als gegenüber Bewegungen von zumindest der Position des Jalousiesystems oder der Ausrichtung des Jalousiesystems empfindlich ermittelt werden.

16. System nach Anspruch 8, wobei der Schritt des Zuführens der Bewegungspläne zu mindestens einer Bewegungserfassungseinheit umfasst:
Ermitteln einer Empfindlichkeit gegenüber Bewegung von jeder, mindestens einen Position und einen Ausrichtung des Jalousiesystems für jede, mindestens eine Bewegungserfassungseinheit;
Zuführen des Plans zu denen der mindestens einen, als empfindlich gegenüber der Bewegung ermittelten Bewegungserfassungseinheit.

17. System nach Anspruch 16, wobei das Ermitteln der Empfindlichkeit umfasst:
Überwachen der Bewegung jeder, mindestens einen Position und einen Ausrichtung des Jalousiesystems;
Ermitteln, ob die Bewegung ausreicht, um die Bewegungserfassungseinheit zu triggern;
Verhindern einer Aktivierung der Bewegungserfassungseinheit im Hinblick auf die Bewegung.

## Revendications

1. Système de gestion d'une réponse à une détection de mouvement dans un système basé sur la détection de mouvement comprenant :
un ou plusieurs capteurs d'occupation (130) répartis autour d'une zone close, lesdits un ou plusieurs capteurs d'occupation détectant un mouvement au sein de la zone close ;
un système de traitement de fenêtre (140) ayant au moins un moyen de commande d'au moins l'une parmi : une position et une orientation du système de traitement de fenêtre ; et
un processeur (720) en communication avec une mémoire (730), la mémoire comportant un code qui, lorsque le processeur y accède, amène le processeur à :
déterminer un programme de déplacements (670, 675) de chacune de la position de traitement de fenêtre et de l'orientation de traitement de fenêtre ;
fournir les programmes de déplacements à des capteurs sélectionnés des un ou plusieurs capteurs d'occupation (130), dans lequel les capteurs d'occupation sélectionnés recevant les programmes fournis annulent une détection de mouvement pendant des périodes desdits déplacements identifiés par les programmes fournis.

2. Système selon la revendication 1, dans lequel les programmes de déplacements comportent un temps pour démarrer un déplacement et une durée de déplacement.

3. Système selon la revendication 1, dans lequel les programmes sont basés sur un intervalle de temps prédéterminé.

4. Système selon la revendication 1, dans lequel lesdits capteurs d'occupation déterminent une sensibilité à un mouvement en surveillant un déplacement de chacune de ladite position de traitement de fenêtre et de l'orientation de traitement de fenêtre.

5. Système selon la revendication 4, dans lequel l'orientation du système de traitement de fenêtre est basée sur une localisation géographique, une orientation géographique du traitement de fenêtre, une heure de la journée, un jour de l'année, des propriétés géométriques du traitement de fenêtre et des propriétés géométriques de l'espace.

6. Système selon la revendication 4, dans lequel les positions du système de traitement de fenêtre sont basées sur au moins l'un d'une localisation géographique, d'une orientation géographique du traitement de fenêtre, d'une heure de la journée, d'un jour de l'année, de propriétés géométriques du traitement de fenêtre et de propriétés géométriques de l'espace.

7. Système selon la revendication 1, dans lequel les capteurs sélectionnés des un ou plusieurs capteurs d'occupation (130) sont sensibles aux déplacements du système de traitement de fenêtre.

8. Système selon la revendication 1, dans lequel les un ou plusieurs capteurs d'occupation (130) comprennent
au moins une unité de détection de mouvement.

9. Système selon la revendication 8, dans lequel les programmes comportent un temps pour démarrer un déplacement et une durée de déplacement d'une position de traitement de fenêtre correspondante et d'une orientation de traitement de fenêtre correspondante.

10. Procédé de gestion d'une réponse à une détection de mouvement dans un système basé sur le mouvement, dans lequel ledit système comprend un ou plusieurs capteurs d'occupation (130) répartis autour d'une zone close, lesdits un ou plusieurs capteurs d'occupation détectant un mouvement au sein de la zone close, ledit procédé comprenant :
la détermination de programmes (670, 675) pour des déplacements d'une position et pour des déplacements d'une orientation d'un système de traitement de fenêtre (140), dans lequel les programmes de déplacements comportent un temps de déplacement et une durée de déplacement ;
la fourniture des programmes de déplacement des capteurs sélectionnés des un ou plusieurs capteurs d'occupation au sein d'une zone close, dans lequel les capteurs d'occupation (130) sélectionnés recevant les programmes fournis annulent une détection de mouvement pendant des périodes desdits déplacements identifiés par les programmes fournis.

11. Procédé selon la revendication 10, dans lequel les programmes sont basés sur un intervalle de temps prédéterminé.

12. Procédé selon la revendication 10, comprenant en outre :
la détermination d'une sensibilité à un mouvement en surveillant un déplacement de chacune de ladite position de traitement de fenêtre et de l'orientation de traitement de fenêtre.

13. Procédé selon la revendication 10, dans lequel les positions du système de traitement de fenêtre sont basées sur au moins l'un d'une localisation géographique, d'une orientation géographique du traitement de fenêtre, d'une heure de la journée, d'un jour de l'année, de propriétés géométriques du traitement de fenêtre et de propriétés géométriques de l'espace.

14. Procédé selon la revendication 10, dans lequel l'orientation du système de traitement de fenêtre est basée sur au moins l'un d'une localisation géographique, d'une orientation géographique du traitement de fenêtre, d'une heure de la journée, d'un jour de l'année, de propriétés géométriques du traitement de fenêtre et de propriétés géométriques de l'espace.

15. Procédé selon la revendication 4, dans lequel les capteurs sélectionnés des un ou plusieurs capteurs d'occupation (130) sont ceux qui sont déterminés comme étant sensibles à un déplacement d'au moins l'une de la position de traitement de fenêtre et de l'orientation de traitement de fenêtre.

16. Procédé selon la revendication 8, dans lequel l'étape de fourniture desdits programmes de déplacements à au moins une unité de détection de mouvement comprend :
la détermination, pour chacune de ladite au moins une unité de détection de mouvement, d'une sensibilité à un déplacement de chacune d'au moins l'une d'une position et d'une orientation du traitement de fenêtre ;
la fourniture dudit programme à celles de ladite au moins une unité de détection de mouvement déterminées comme sensibles audit déplacement.

17. Système selon la revendication 16, dans lequel la détermination de la sensibilité comprend :
la surveillance d'un déplacement de chacune d'au moins l'une d'une position et d'une orientation du traitement de fenêtre ;
la détermination permettant de savoir si ledit déplacement est suffisant pour déclencher ladite unité de détection de mouvement ;
le fait d'empêcher une activation de ladite unité de détection de mouvement au vu dudit déplacement.
